# EUROPEAN PATENT SPECIFICATION

(11) **EP 0 661 873 B1**
(45) Date of publication and mention of the grant of the patent: **01.09.1999**
(21) Application number: 94309826.9
(22) Date of filing: 23.12.1994
(51) Int. Cl.: H04N 5/63, H04N 7/22

(54) **A video-signal transmitter-receiver and a signal transmission apparatus utilizing the same**
Videosignal Sende-Empfänger und Signalübertragungsgerät zu dessen Verwendung
Emetteur-récepteur d'un signal vidéo et dispositif de transmission de signaux utilisant celui-ci

(30) Priority: 28.12.1993 JP 33582993
(43) Date of publication of application: 05.07.1995
(73) Proprietor: MATSUSHITA ELECTRIC INDUSTRIAL CO., LTD., Kadoma-shi, Osaka-fu, 571 (JP)
(72) Inventor: Miyajima, Akio, Neyagawa-shi, Osaka 572 (JP)
(74) Representative: Crawford, Andrew Birkby

(56) References cited:
- FUNKSCHAU, vol. 62,no. 21, 29 December 1989 MÜNCHEN, DE, pages 51-55, XP 000085727 GENDSIOR ET AL 'Signale auf der Glasfaser'
- PATENT ABSTRACTS OF JAPAN vol. 5 no. 34 (E-048) ,4 March 1981 & JP-A-55 161475 (FUJITSU GENERAL LTD) 16 December 1980,
- HOROWITZ, PAUL ET. AL.: "The art of electronics" , 1980, PRESS SYNDICATE OF THE UNIVERSITY OF CAMBRIDGE, NEW YORK

## Description

### SPECIFICATION

### BACKGROUND OF THE INVENTION

This invention relates to a transmitter and receiver of signals including video signals, and these are to be incorporated mainly in audio and video apparatuses (hereinafter these are abbreviated as AV apparats) such as televisions and video decks, and this relates to a signal transmission apparatus combining these transmitters and receivers also.

This invention is highly effective when this is applied to battery-operated portable transmitters or receivers, realizing substantial reduction of power consumption therein. Moreover, this invention can also be effective when this is applied to exchange information between indoor AV equipments using data couplers and to long-distance fiber-optical communication apparatuses.

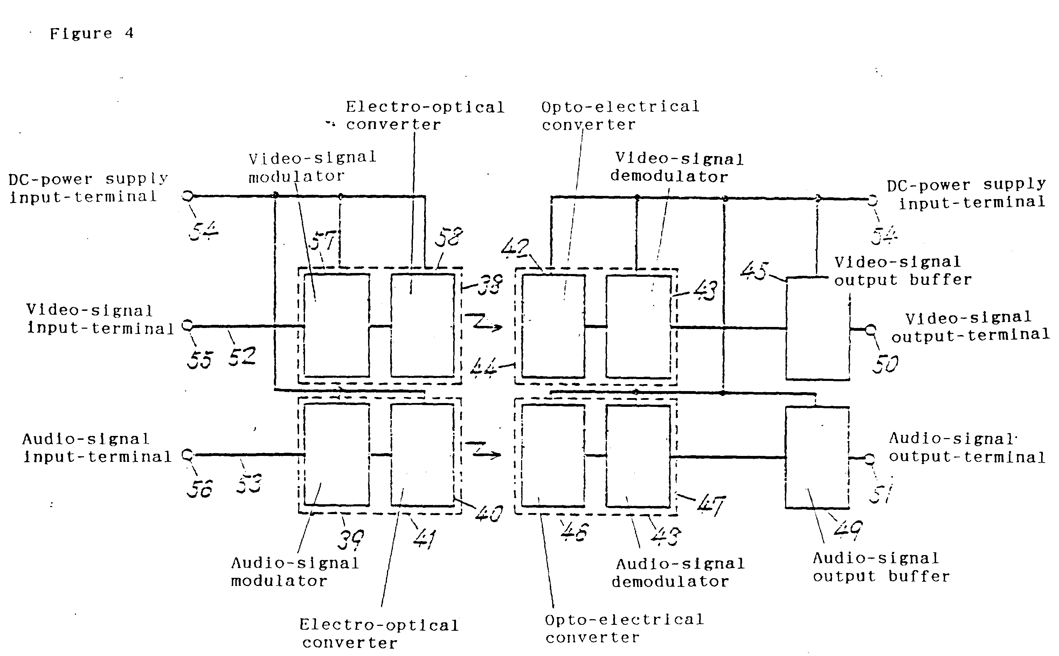

Fig. 4 shows a conventional art of such, showing is a block diagram of AV signal transmitter, wherein a dc power-supply (not shown) is connected to dc-power supply input-terminal 54, video-signal 52 is inputted into video-signal input-terminal 55, and audio-signal 53 is inputted into audio-signal input-terminal 56.

The video-signal 52 inputted into video-signal input-terminal 55 is inputted further into video-signal modulator 57 for modulation, and the signal modulated thereby is then inputted into electro-optical converter 58 wherein the electrical signal is converted into an optical-signal, and this is transmitted further. In here, video-signal modulator 57 and electro-optical converter 58 constitute video-signal transmitter 38.

On the other hand, the audio-signal 53 inputted into audio-signal input-terminal 56 is inputted into audio-signal modulator 39 wherein the audio-signal is modulated. After this, the signal is inputted into electro-optical converter 40 wherein the electrical signal is converted into an optical signal which is transmitted further. In here, audio-signal modulator 39 and electro-optical converter 40 constitute audio-signal transmitter 41.

The optical signals transmitted from video-signal transmitter 38 and voice-signal transmitter 41 are inputted into opto-electrical convertor 42 and are converted into electrical signals which are demodulated by means of video-signal demodulator 43. In here, opto-electrical converter 42 and video-signal demodulator 43 constitute video-signal receiver 44.

The signal received at video-signal receiver 44 is outputted from video-signal output-terminal 50 through video-signal output-buffer 45.

On the other hand, the audio optical-signal is converted into an electrical signal by means of opto-electrical converter 46, and the electrical signal is demodulated by means of audio-signal demodulator 47. In here, opto-electrical converter 46 and audio-signal demodulator 47 constitute audio-signal receiver 48.

The audio-signal received at audio-signal receiver 48 is outputted from audio-signal output-terminal through audio-signal output-buffer 49.

Explaining now the operations of these in next, at a transmitter condition where a dc-power is kept supplied to dc-power input-terminal 54, video-signal 52 inputted in video-signal input terminal 55 is modulated by means of video-signal modulator 57, and the modulated electrical signal is converted into an optical signal by means of electro-optical converter 58.

On the other hand, at a receiver condition where a dc-power is kept supplied to dc-power input-terminal 54, the optical signal is converted into an electrical signal by means of optoelectrical converter 42, and the electrical signal is demodulated into original video-signal 52 by means of video-signal demodulator 43, and original video-signal 52 is outputted from video-signal output-terminal 50 through video-signal output buffer 45.

Likewise, as for the audio-signal, at a transmitter condition where a dc-power is kept supplied to dc-power input terminal 54, audio-signal 53 inputted into audio-signal input terminal 56 is modulated by means of audio-signal modulator 39, and the modulated electrical signal is converted into an optical signal by means of electro-optical converter 40.

At the receiver, said optical-signal is converted into an electrical signal by means of opto-electrical converter 46, and the electrical signal is demodulated into original audio-signal 53 by means of audio-signal demodulator 47, and the original audio-signal 53 is outputted from audio-signal output-terminal 51 through audio-signal output-buffer 49.

As above explained, according to the structure of conventional signal transmitter, video-signal 52 inputted into video-signal input-terminal 55 at a condition where a dc-power is kept supplied to dc-power input-terminal 54, is demodulated into original video-signal 52, and this is outputted from video-signal output-terminal 50.

Likewise, audio-signal 53 inputted into audio-signal input terminal 56 is converted into original audio-signal 53 which is outputted from audio-signal output-terminal 51.

JP-A-55/161475 discloses a squelch circuit for a television receiver in which the synchronizing signal separated from the video carrier wave signal by a synchronizing separating circuit is converted to a pulse signal by a waveform shaping circuit and is converted to a DC voltage by an integrating circuit and is sent to a switching circuit. Then, the squelch signal from the switching circuit is cut off, and the sound amplifying circuit operates normally. When the tuner circuit selects an idle channel, the synchronizing signal is not included, and therefore , the squelch signal is transmitted from the switching circuit to turn off the sound amplifying circuit.

### SUMMARY OF THE INVENTION

However, since the above-shown signal transmission apparatus consisted of a conventional video-signal transmitter, audio-signal transmitter, video-signal receiver, and audio-signal receiver, it is not provided with a video signal detecting function, the power-consumption of this apparatus remains same regardless the input or non-input of video-signal, constituting a problem.

The present invention as defined in the appended claims is to solve this problem and to offer a signal-transmission apparatus with a substantially less power-consumption so far as the input of video-signal is suspended.

The invented signal-transmission apparatus consists of a synchronizing signal separator separating the synchronizing signal from the inputted signal containing video-signals, a monostable circuit of which recovery period or unstable period after an input of triggering signal is longer than the period of synchronizing signal separated by means of said synchronizing signal separator, a dc-power supply controller controlling the supply of dc-power to the apparatus according to the output of said monostable circuit, a video-signal modulator modulating the inputted video-signal, and a transmitter transmitting the output of said video-signal modulator, wherein the power-consumption of said apparatus is reduced at its lowest level by using said synchronizing signal separated by means of said synchronizing signal separator as a triggering signal of the monostable circuit.

Moreover, the invented video-signal transmission apparatus is further provided with a video-signal receiver into which an input signal containing a video-signal is inputted, a video-signal demodulator by which said video-signal received at the video-signal receiver is demodulated, a synchronizing signal separator by which said synchronizing signal of video signal is demodulated by means of said synchronizing signal demodulator, a monostable circuit of which unstable period is longer than the period of synchronizing signal which is separated by means of said synchronizing signal separator, and a dc-power supply on-off controller controlling the supply of dc-power according to the output of said monostable circuit.

Thus, when said video-signal transmission apparatus os combined with a video-signal receiver utilizing said synchronizing signal separated by means of said synchronizing signal separator as a triggering signal of the monostable circuit, a signal transmission apparatus of which power-consumption is reduced at its minimum level can be obtained.

Furthermore, higher advantages of the present invention would be available in a case where the input-signal is a complex signal or a multiplex signal containing a signal other than the video-signal such as a audio-signal.

In another words, the power consumption of the invented signal transmission apparatus can be further reduced to its minimum level when a transmitter in which an input signal containing at least a video-signal is processed, is combined with a receiver provided with a synchronizing signal detector is combined with a dc-power supply on-off controller.

Therefore, the invented signal transmission apparatus consists of a transmitter into which a signal containing at least a video signal is inputted, a receiver having a synchronizing signal separator separating a synchronizing signal from said video signal, a monostable circuit of which period recovering its stable state from its unstable period after an input of triggering signal is longer than the period of synchronizing signal separated by means of said synchronizing signal separator, and a dc-power supply on-off controller controlling the supply of dc-power according to the output of said monostable circuit.

Since said synchronizing signal separated by means of said synchronizing signal separator is used as a triggering signal of said monostable circuit, said monostable circuit is continuously kept at an unstable state so far as said synchronizing signal is inputted into said monostable cirucit as a triggering signal.

In general, a monostable circuit can be in either one of the two states, i.e., stable or unstable state. Thus, when a triggering signal is inputted in said monostable circuit which is normally at a stable state, the circuit state is shifted toward its unstable state and remains there for a period determined by the constants of said monostable circuit, and the state of said circuit is recovered to its stable state after a certain period is passed.

Thus, an output of a predetermined pulse width can be obtained by utilizing this switching action. Defining a period in which the circuit is in a unstable state as an unstable period, and by setting said unstable period at a period longer than the period of said synchronizing signal outputted from said synchronizing signal separator, it is possible to realize the following operations.

When a first synchronizing signal is inputted into said monostable circuit which is in a stable state as a triggering signal, the circuit state is reversed into an unstable state. However, when a next synchronizing signal is inputted into said monostable circuit before the circuit regains its stable state after a certain period, said circuit state is kept remained in its unstable state.

This means that, so far as the video-signal having a certain form is inputted into said synchronizing signal separator, said synchronizing signal outputted from said synchronizing signal separator keeps said monostable circuit in an unstable state, and this period holding said monostable circuit at an unstable state corresponds to a period during which said video-signal is kept inputted.

Thus, by setting said period holding this unstable state as a dc-power supply control signal and by inputting said control signal into said dc-power supply on-off controller, it is possible to control said dc-power supply according to the input of video-signal.

As above described, the dc-power supplies to said transmitter and receiver other than the video-signal detecting circuit which is indispensable to detect at least said video-signal can be suspended by these. Therefore, a substantial reduction of power consumption at said transmitter, receiver, or said signal transmission apparatus in total can be realized.

### BRIEF DESCRIPTION OF THE DRAWINGS

Fig. 1 shows a block diagram of signal transmission apparatus which is an embodiment of the invention, and Fig. 2 shows signal waveforms observed at points in the block diagram.

Fig. 3 shows a block diagram of invented receiver circuit. Fig. 4 shows a block diagram of conventional signal transmission apparatus.

### DESCRIPTION OF THE PREFERRED EMBODIMENTS

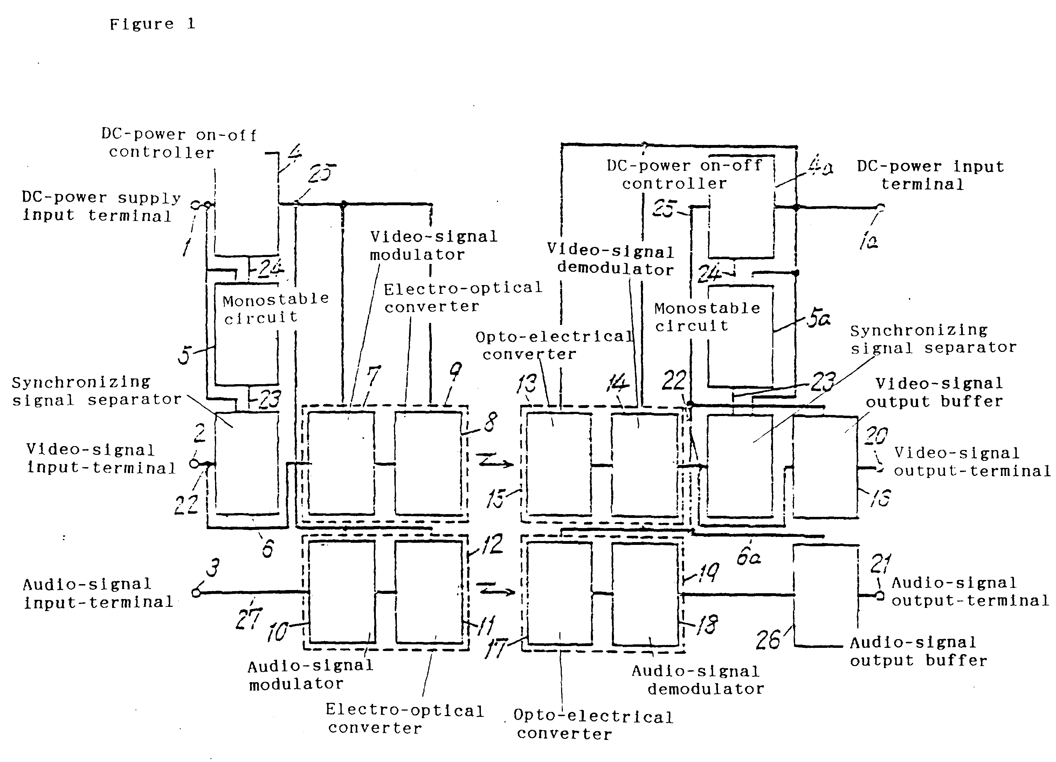

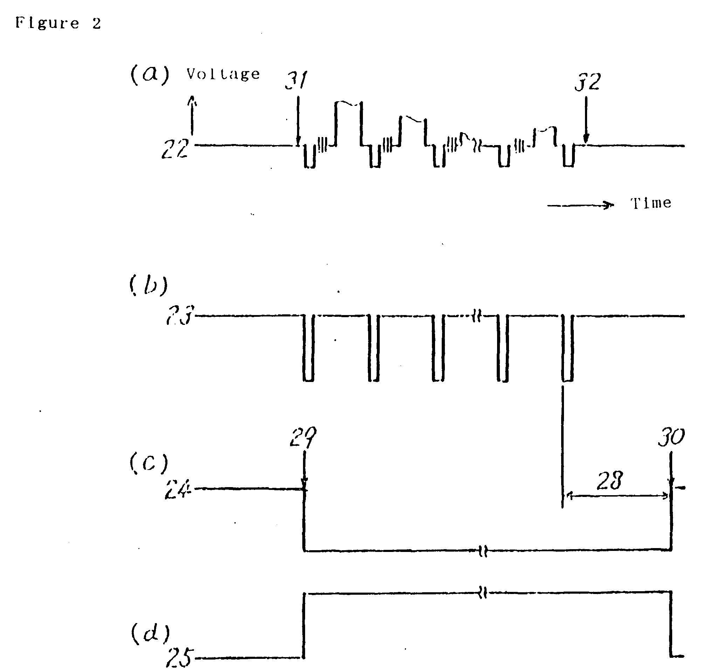

An embodiment of the invention is now explained below by referring Fig. 1 and Figs. 2(a)-2(d).

According to Fig. 1, the receiver of the invented signal transmission apparatus is provided with three terminals, i.e., dc-power supply input-terminal 1, video-signal input-terminal 2, and voice-signal input-terminal 3. The dc-power supply input-terminal 1 is connected to dc-power supply on-off controller 4, monostable circuit 5, and synchronizing signal separator 6, and the video-signal input-terminal 2 is connected to synchronizing signal separator 6, while the output of synchronizing signal separator 6 is connected to dc-power supply on-off controller 4 through monostable circuit 5.

Furthermore, video-signal input-terminal 2 is connected to video-signal modulator 7, and audio-signal input-terminal 3 is connected to audio-signal modulator 10, and the output of video-signal modulator 7 is connected to electro-optical converter 8, thus constituting video-signal transmitter 9 together with video-signal modulator 7.

The output of audio-signal modulator 10 is connected to electro-optical, converter 11, constituting audio-signal transmitter 12 together with audio-signal modulator 10. Moreover, the output of dc-power supply on-off controller 4 is connected to video-signal modulator 7, electro-optical converter 8, audio-signal modulator 10, and electro-optical converter 11.

On the other hand, the receiver provided with dc-power supply input-terminal la is connected to dc-power supply on-off controller 4a, monostable circuit 5a, and synchronizing signal separator 6a. The opto-electrical converter 13 receiving the optical video-signal from the transmitter is connected to video-signal demodulator 14, constituting video-signal receiver 15 together with opto-electrical converter 13 and video-signal demodulator 14. The opto-electrical converter 17 receiving the optical audio-signal from the transmitter is connected to audio-signal demodulator 18, constituting audio-signal receiver 19 together with opto-electrical converter 17 and audio-signal demodulator 18.

The output of video-signal receiver 15 is connected to synchronizing signal separator 6a and video-signal output buffer 13 so that the reproduced output is outputted from video-signal output-terminal 20 of video-signal output buffer 16. The output of synchronizing signal separator 6a is connected to dc-power supply on-off controller 4a through monostable circuit 5a, and the output of audio-signal receiver 19, which is the reproduced signal is outputted from audio-signal output-terminal 21 through audio-signal output buffer 26.

The output of dc-power supply on-off controller 4a is connected to audio-signal receiver 19, video-signal output buffer 13, and audio-signal output buffer 26, while opto-electrical converter 13 of video-signal receiver 15 and video-signal demodulator 14 are connected directly to dc-power supply input-terminal 1a.

As above explained, the signal transmission apparatus consists of a transmitter and a receiver. The timing charts showing signal exchange therebetween are shown in Figs. 2(a) to 2(d). In these, 31 is a timing at which the input of video-signal 22 from either video-signal input-terminal or video-signal demodulator is began, and 32 is a timing at which the input of video-signal 22 is ended. 23 is synchronizing signal 23 outputted from synchronizing signal separator 6 or 6a, 24 is a signal outputted from monostable circuit 5 or 5a.

While the synchronizing pulse of synchronizing signal 23 is inputted into monostable circuit 5 or 5a as its triggering pulse in order to the bring monostable circuit into an unstable state, 28 is a monostable pulse width, and this corresponds to the period of unstable state. This period is necessary to recover the stable state of monostable circuit 5 from its unstable state after a last synchronizing pulse is inputted, or from the timing at which the synchronizing pulse starts to fall.

29 is a timing at which the output signal 24 of monostable circuit 5 or 5a falls into 0 volt which corresponds to the unstable state from the stable state which corresponds to 5 volts. 25 shows an operation of dc-power supply on-off controller 4 or 4a according to output-signal 24, showing a change of the dc-power supply voltage.

Explaining an operation of the above-shown embodiment of the invention, the input of video-signal 22 into the receiver is commenced at a timing 31 at which the input of video-signal is started regardless the types of video-signal which could be either digital or analog, and the input of video-signal is terminated at a timing 32 at which the input of video-signal is terminated, as shown in Fig. 2. The synchronizing signal 23 is separated by means of synchronizing signal separator 6 only in a period during which the input of video-signal is started and terminated.

In addition to this, the object of the invention can be accomplished by using either one of the operations including an operation by which synchronizing signal 23 is separated from video-signal by means of synchronizing signal separator 6, an operation by which the synchronizing signal is separated from a so-called composite signal in which luminance signal, chrominance signal, and synchronizing signal are combined, an operation by which the synchronizing signal is separated from a so-called S-video-signal in which the luminance and the chrominance signals had been separated, an operation by which the synchronizing signal is separated from RGB signal, and an operation by which the signal corresponding to the synchronizing signal is separated from the digital video signal in an unit of either frame, field or block.

Since, so far as monostable pulse width 28 corresponding to its unstable period of monostable circuit is set at a period of more than 20 ms, the period corresponding to the vertical synchronizing signals of NTSC, PAL, or SECOM could take a value of 16.6, 20, or 20 ms respectively.

Thus, the triggering signal would be inputted at an interval less than 20 ms, which is a pulse width of monostable circuit. Since this is independent of the types of input video signals, i.e., NTSC, PAL or SECAM, so that the dc-power supply output signal 24 is held at 0 volt during the period of synchronizing signal or the period between the timing 29 at which the output signal of monostable circuit takes a value of 0 volt to the timing 30 at which the output signal takes a value of 5 volts.

Therefore, as shown in Fig. 2(d), the dc-power supply voltage 25 is held at 5 volts during the period from timing 29 at which the output signal of monostable circuit 24 is held at 0 volt to timing 30 at which the output signal takes a value of 5 volts.

This means that the dc-power is supplied to the circuits during a period in which the video-signal is inputted, and the dc-power is cut off during a period other than this, so that the power consumption in video-signal transmitter 9 and audio-signal transmitter 12 to which the dc-power is supplied through dc-power supply on-off controller 4 is reduced at its minimum level.

Likewise, in a period during which signal is received at video-signal receiver 15 and outputted video signal 22 is supplied to synchronizing signal separator 6a, dc-power is supplied to all of the receiver circuits.

However, to each of the receiver sections including video-signal output buffer 16, audio-signal receiver 19, and audio-signal output buffer 26 shown in Fig. 2, dc-power is supplied through dc-power on-off controller 4a only in an indispensable period, and is cut off in other periodd so that the dc-power consumed in these sections can be kept at a minimum level.

In another words, the dc-power supply is so controlled that the entire circuit is put in operation only in a period at which video-signal is processed, and only the circuit by which the input of video-signal is detected is put in operation in a period other than the above, the power consumption can be reduced in its minimum, so that a substantial reduction of power consumption in the entire AV transmission apparatus can be realized.

Furthermore, so far as video-signal 22 is inputted in the receiver, dc-power supply on-off controller 4 is kept at on-state so that the video-signal 22 inputted from video-signal input-terminal 2 is modulated at video-signal modulator 7, and the modulated electrical signal is converted into an optical signal by means of electro-optical convertor 8, and the converted electrical signal is demodulated into a video-signal by means of video-signal demodulator 14, and the reproduced original 22 is outputted from video-signal output-terminal 20 through video-signal output buyer 16.

Likewise, when the audio-signal 27 is inputted in audio-signal input-terminal 3 of transmitter, it is modulated by means of audio-signal modulator 10, and the modulated electrical signal is converted into an optical signal by means of electro-optical converter 11. The optical signal is then converted into an electrical signal by means of opto-electrical converter 17 of receiver, and the electrical signal is demodulated into the original audio-signal by means of audio-signal demodulator 18, and the original audio-signal 27 is outputted from audio-signal output terminal 21 through audio-signal output buffer 26.

According to the above described embodiment of the invention, since the dc-power supply is cut off by means of dc-power supply on-off controller 4 when no video-signal is inputted, the total dc-power consumed in the video-signal transmitter 9, audio-signal transmitter 12, video-signal output buffer 16, audio-signal receiver 19, and audio-signal output buffer 26, becomes zero, total power consumption of AV transmission apparatus in a period during which no video-signal 22 is inputted, can be reduced to its minimum level.

Furthermore, when the present invention is applied to a transmitter and receiver in which a multiplex signal containing other signals such as audio-signals beside video-signal is processed, the video-signal contained in the multiplex signal acts as a signal to detect the multiplex-signal regardless if it is an analog signal or digital signal. Thus, since the various signals contained in multiplex signals can be detected by utilizing the video-signal only, the control of dc-power supplies connected to a complicated circuit by which various multiplexed signals are processed is possible, and the power consumption of this total system can be effectively reduced also.

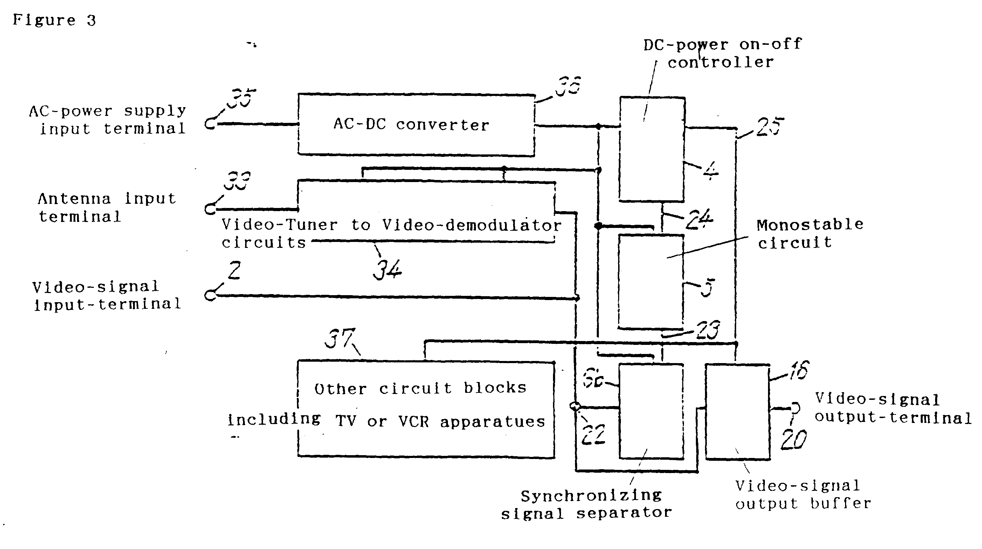

Fig. 3 shows a block diagram of other embodiment of the invention, wherein 33 is an antenna input-terminal, 34 is a tuner, 35 is an ac-power input-terminal, 36 is an ac-to-dc converter, 37 is another circuit block of video apparatus such as TV and VCR.

Different from the embodiments shown in Figs. 1 and 2, in this case, ac-power inputted in ac-power input-terminal 35 is converted in to dc-power, and this is supplied to circuits 34 covering from video signal tuner to video-signal demodulator, synchronizing signal separator 6b, monostable circuit 5, and dc-power supply on-off controller 4.

Like the explanations described for the embodiment shown in Figs. 1 and 2, the power supply to these circuits is cut off by means of dc-power supply on-off controller 4 when video-signal 22 available through circuits 34 covering video-signal tuner to video-signal demodulator, becomes unavailable due to the ending of daily broadcasting for instance. Therefore, the power consumption in video-signal output buffer 16 and other circuit blocks 37 in which video signals of TV or VCR are processed can be decreased. Thus, in this embodiment, the power consumption in these apparatuses other than the video-signal detecting block can be nullified when no video-signal is inputted therein.

According to the present invention, as shown in the above embodiment of the invention, no dc-power is supplied to at least video-signal transmitter or receiver so far as no video-signal is inputted. Therefore, by using this invention, the power consumption in the total signal transmission apparatus can be set at a its minimum level so far as no video-signal is inputted therein. Furthermore, the savable power consumption in the signal transmission apparatus in total would be higher when more of the transmittable signals other than video-signal are processed therein.

## Claims

1. A video-signal transmission apparatus comprising:
a video-signal input-terminal (2) to which an input-signal containing a video signal is inputted;
a synchronizing signal separator (6) separating a synchronizing signal from the video-signal inputted in said video-signal input-terminal;
a monostable circuit (5) of which the period for recovering its stable state, or unstable period, after an input of a triggering signal, is longer than the period of the synchronizing signal which is separated by means of said synchronizing signal separator;
a dc-power supply on-off controller (4) controlling the on-off of a dc-power supply according to the output of said monostable circuit;
a video-signal modulator (7) modulating said video-signal inputted from said video-signal input-terminal (2); and
a transmitter (9) transmitting the output of said video-signal modulator, wherein said synchronizing signal separated by means of said synchronizing signal separator (6) is used as said triggering signal of said monostable circuit (5).

2. A video-signal transmission apparatus according to Claim 1 of the invention, wherein dc-power is supplied directly to at least said synchronizing signal separator (6), said monostable circuit (5), and said dc-power supply on-off controller (4), and is supplied indirectly to at least said video-signal modulator (7) and said transmitter (9) through said dc-power on-off controller (4).

3. A video-signal transmission apparatus according to Claim 1 of the invention provided with an audio-signal input-terminal (3), an audio-signal modulator (10) by which an audio-signal inputted from said audio-signal input-terminal is modulated, and an audio-signal transmitter (12) for transmitting the output of said audio-signal modulator, wherein dc-power is supplied indirectly to at least said audio-signal modulator (10) and audio-signal transmitter (12) through said dc-power on-off controller (4)

4. A video-signal receiver provided with an input terminal into which an input signal including a video-signal is inputted;
a video-signal demodulator ( 14) demodulating said video-signal sent from said video-signal receiver;
a synchronizing signal separator (6a) separating a synchronizing signal of said video-signal demodulated by means of said video-signal demodulator; and
a switching circuit (5a) wherein said synchronizing signal separated by means of said synchronizing signal separator is used as a triggering signal of said switching circuit
characterised in that the switching circuit is a monostable circuit (5a) whose period for recovering its stable state, or unstable period, after an input of triggering signal, is longer than the period of the synchronizing signal separated by means of said synchronizing signal separator, and in that there is further provided a dc-power supply on-off controller (4a) controlling the on-off of dc-power supply according to the output of said monostable circuit.

5. A video-signal receiver according to Claim 4 of invention, provided with a video-signal output buffer ( 16) for storing the output of said video-signal demodulator (14), wherein said dc-power supply connected to at least said video-signal output buffer (16) is turned off when no video-signal is received at said video-signal receiver by means of said dc-power on-off controller (4a).

6. A video-signal receiver according to Claim 4 of the invention provided, incorporated in a video-signal apparatus such as a television receiver or video-deck wherein the dc-power supply to at least said video-signal apparatus is turned off by means the dc-power on-off controller (4a) when no video-signal is received at said video-signal receiver.

7. A video-signal receiver according to Claim 4 of the invention, provided with an audio-signal receiver (19) and an audio-signal demodulator (18) demodulating an audio-signal received at said audio signal receiver, wherein dc-power is supplied to said audio signal receiver and audio-signal demodulator through the dc-power on-off controller (4a).

8. A signal transmission arrangement comprising a video-signal transmission apparatus according to any one of claims 1 to 3 in combination with a video signal receiver according to any one of claims 4 to 7.

## Patentansprüche

1. Videosignal-Übertragungsvorrichtung, die aufweist:
einen Videosignal-Eingangsanschluß (2), in den ein Eingangssignal, das ein Videosignal enthält, eingegeben wird;
einen Synchronisierungssignal-Separator (6), der ein Synchronisierungssignal von dem Videosignal separiert, das in den Videosignal-Eingangsanschluß eingegeben ist;
einen monostabilen Schaltkreis (5), dessen Periode zum Zurückerlangen seines stabilen Zustands, oder instabile Periode, nach einem Eingang eines Triggersignals, länger als die Periode des Synchronisierungssignals ist, das mittels des Synchronisierungssignal-Separators separiert ist;
eine DC-Energieversorgungs-Ein-Aus-Steuereinheit (4), die den Ein-Aus-Zustand einer DC-Energieversorgung gemäß dem Ausgang des monostabilen Schaltkreises steuert;
einen Videosignal-Modulator (7), der das Videosignal moduliert, das von dem Videosignal-Eingangsanschluß (2) eingegeben ist; und
einen Sender (9), der den Ausgang des Videosignal-Modulators sendet, wobei das Synchronisierungssignal, das mittels des Synchronisierungssignal-Separators (6) separiert ist, als das Triggersignal des monostabilen Schaltkreises (5) verwendet wird.

2. Videosignal-Übertragungsvorrichtung nach Anspruch 1 der Erfindung, wobei die DC-Energie direkt zu zumindest dem Synchronisierungssignal-Separator (6), dem monostabilen Schaltkreis (5) und der DC-Energieversorgungs-Ein-Aus-Steuereinheit (4) zugeführt wird, und indirekt zu zumindest dem Videosignal-Modulator (7) und dem Sender (9) über die DC-Energie-Ein-Aus-Steuereinheit (4) zugeführt wird.

3. Videosignal-Übertragungsvorrichtung nach Anspruch 1 der Erfindung, versehen mit einem Audiosignal-Eingangsanschluß (3), einem Audiosignal-Modulator (10), durch den ein Audiosignal, das von dem Audiosignal-Eingangsanschluß eingegeben ist, moduliert wird, und einem Audiosignal-Sender (12) zum Senden des Ausgangs des Audiosignal-Modulators, wobei die DC-Energie indirekt zu zumindest dem Audiosignal-Modulator (10) und dem Audiosignal-Sender (12) über die DC-Energie-Ein-Aus-Steuereinheit (4) zugeführt wird.

4. Videosignal-Empfänger, versehen mit einem Eingangsanschluß, in den ein Eingangssignal, das ein Videosignal umfaßt, eingegeben wird;
einem Videosignal-Demodulator (14), der das Videosignal demoduliert, das von dem Videosignal-Empfänger geschickt ist;
einem Synchronisierungssignal-Separator (6a), der ein Synchronisierungssignal des Videosignals separiert, das mittels des Videosignal-Demodulators demoduliert ist, und
einem Umschaltschaltkreis (5a), wobei das Synchronisierungssignal, das mittels des Synchronisierungssignal-Separators separiert ist, als ein Triggersignal des Umschaltschaltkreises verwendet wird,
dadurch gekennzeichnet, daß der Umschaltschaltkreis ein monostabiler Schaltkreis (5a) ist, dessen Periode zum Wiedererlangen seines stabilen Zustands, oder instabiler Periode, nach einem Eingang eines Triggersignals, länger als die Periode des Synchronisierungssignals ist, das mittels des Synchronisierungssignal-Separators separiert ist, und daß dabei weiterhin eine DC-Energieversorgungs-Ein-Aus-Steuereinheit (4a) vorgesehen ist, die den Ein-Aus-Zustand der DC-Energieversorgung gemäß dem Ausgang des monostabilen Schaltkreises steuert.

5. Videosignal-Empfänger nach Anspruch 4 der Erfindung, versehen mit einem Videosignal-Ausgangspuffer (16) zum Speichern des Ausgangs des Videosignal-Demodulators (14), wobei die DC-Energieversorgung, die mit zumindest dem Videosignal-Ausgangspuffer (16) verbunden ist, abgeschaltet wird, wenn kein Videosignal an dem Videosignal-Empfänger mittels der DC-Energie-Ein-Aus-Steuereinheit (4a) empfangen wird.

6. Videosignal-Empfänger nach Anspruch 4 der Erfindung, der eine Videosignal-Vorrichtung, wie beispielsweise einen Fernsehempfänger oder ein Videodeck, umfaßt, wobei die DC-Energieversorgung zu zumindest der Videosignal-Vorrichtung mittels der DC-Energie-Ein-Aus-Steuereinheit (4a) abgeschaltet wird, wenn kein Videosignal an dem Videosignal-Empfänger empfangen wird.

7. Videosignal-Empfänger nach Anspruch 4 der Erfindung, versehen mit einem Audiosignal-Empfänger (19) und einem Audiosignal-Demodulator (18), der ein Audiosignal demoduliert, das an dem Audiosignal-Empfänger empfangen ist, wobei die DC-Energie zu dem Audiosignal-Empfänger und dem Audiosignal-Demodulator über die DC-Energie-Ein-Aus-Steuereinheit (4a) zugeführt wird.

8. Signalübertragungsanordnung, die eine Videosignal-Übertragungsvorrichtung gemäß einem der Ansprüche 1 bis 3 in Kombination mit einem Videosignal-Empfänger gemäß einem der Ansprüche 4 bis 7 aufweist.

## Revendications

1. Appareil de transmission de signal vidéo comprenant :
une borne (2) d'entrée de signal vidéo, à laquelle est envoyé un signal d'entrée contenant un signal vidéo ;
un séparateur (6) de signal de synchronisation séparant un signal de synchronisation du signal vidéo introduit dans ladite borne d'entrée du signal vidéo ;
un circuit monostable (5), dont la période de rétablissement de l'état stable, ou période instable, après l'arrivée d'un signal de déclenchement est supérieure à la période du signal de synchronisation qui est séparée au moyen dudit séparateur du signal de synchronisation ;
une unité (4) de commande de branchement-débranchement d'une alimentation en énergie à courant continu commandant le branchement-débranchement d'une alimentation en énergie à courant continu en fonction de la sortie dudit circuit monostable ;
un modulateur (7) du signal vidéo modulant ledit signal vidéo introduit à partir de ladite borne (2) d'entrée du signal vidéo ;
un émetteur (9) émettant le signal de sortie dudit modulateur du signal vidéo, ledit signal de synchronisation séparé, au moyen dudit séparateur (6), du signal de synchronisation étant utilisé pour constituer ledit signal de déclenchement dudit circuit monostable (5).

2. Appareil de transmission de signal vidéo selon la revendication 1 de l'invention dans lequel l'énergie à courant continu est appliquée directement au moins audit séparateur (6) du signal de synchronisation, audit circuit monostable (5) et à ladite unité (4) de commande de branchement-débranchement de l'alimentation en énergie à courant continu, et est envoyée indirectement au moins audit modulateur (7) du signal vidéo et audit émetteur (9) par l'intermédiaire de l'unité (4) de commande de branchement-débranchement de l'alimentation en énergie à courant continu.

3. Appareil de transmission de signal vidéo selon la revendication 1 de l'invention, équipé d'une borne (3) d'entrée de signal audio, d'un modulateur (10) de signal audio, au moyen duquel un signal audio introduit à partir de ladite borne d'entrée du signal audio est modulé, et un émetteur (12) du signal audio pour émetteur le signal de sortie dudit modulateur du signal audio, l'énergie à courant continu étant envoyée indirectement au moins audit modulateur (10) du signal audio et audit émetteur (12) du signal audio par l'intermédiaire de ladite unité (4) de branchement-débranchement de l'alimentation en énergie à courant continu.

4. Récepteur de signal vidéo équipé d'une borne d'entrée, dans laquelle arrive un signal d'entrée incluant un signal vidéo ;
un démodulateur (14) du signal vidéo, démodulant ledit signal vidéo émis par ledit récepteur du signal vidéo ;
un séparateur (6a) du signal de synchronisation, séparant un signal de synchronisation dudit signal vidéo démodulé au moyen dudit démodulateur du signal vidéo ; et
un circuit de commutation (5a), dans lequel ledit signal de synchronisation séparé par ledit séparateur du signal de synchronisation est utilisé en tant que signal de déclenchement dudit circuit de commutation ;
caractérisé en ce que le circuit de commutation est un circuit monostable (5a) dont la période de rétablissement de son état stable, ou période instable, après l'arrivée d'un signal de déclenchement est supérieure à la période du signal de synchronisation séparé par ledit séparateur du signal de synchronisation, et en ce qu'il est en outre prévu une unité (4a) de commande de branchement-débranchement de l'alimentation en énergie à courant continu, qui commande le branchement-débranchement de l'alimentation en énergie à courant continu conformément au signal de sortie dudit circuit monostable.

5. Récepteur de signal vidéo selon la revendication 4 de l'invention, équipé d'un tampon (16) de sortie du signal vidéo pour mémoriser le signal de sortie dudit démodulateur (4) du signal vidéo, ladite alimentation en énergie à courant continu raccordée au moins audit tampon (16) de sortie du signal vidéo étant débranchée lorsqu'aucun signal vidéo n'est reçu dans ledit récepteur du signal vidéo, au moyen de ladite unité (4a) de commande de branchement-débranchement de l'alimentation en énergie à courant continu.

6. Récepteur de signal vidéo selon la revendication 4 de l'invention, incorporé dans un appareil traitant un signal vidéo, tel qu'un récepteur de télévision ou une platine vidéo, dans lequel l'alimentation en énergie à courant continu appliquée au moins audit appareil traitant un signal vidéo est débranchée par l'intermédiaire de l'unité (4a) de commande de branchement-débranchement de l'alimentation en énergie à courant continu lorsqu'aucun signal vidéo n'est reçu dans ledit récepteur du signal vidéo.

7. Récepteur de signal vidéo selon la revendication 4 de l'invention, équipé d'un récepteur (19) du signal audio et d'un démodulateur (18) du signal audio démodulant le signal audio reçu dans ledit récepteur du signal audio, l'alimentation en énergie à courant continu étant envoyée audit récepteur du signal audio et audit démodulateur du signal audio par l'intermédiaire de l'unité (4a) de commande de branchement-débranchement de l'alimentation en énergie à courant continu.

8. Agencement de transmission de signal comprenant un appareil de transmission de signal vidéo selon l'une quelconque des revendications 1 à 3, en combinaison avec un récepteur de signal vidéo selon l'une quelconque des revendications 4 à 7.
